(19) Europäisches Patentamt / European Patent Office / Office européen des brevets

(11) **EP 4 541 673 A1**

(12) **EUROPEAN PATENT APPLICATION**
published in accordance with Art. 153(4) EPC

(43) Date of publication:
**23.04.2025 Bulletin 2025/17**

(21) Application number: 23823569.1

(22) Date of filing: **11.05.2023**

(51) International Patent Classification (IPC):
**B60T 8/171** (2006.01)    **B60T 13/74** (2006.01)
**F16D 65/16** (2006.01)    **F16D 121/24** (2012.01)
**F16D 125/20** (2012.01)

(52) Cooperative Patent Classification (CPC):
**B60T 8/171; B60T 13/74; F16D 65/16**

(86) International application number:
**PCT/JP2023/017701**

(87) International publication number:
**WO 2023/243266 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:    **15.06.2022    JP 2022096726**

(71) Applicant: **Hitachi Astemo, Ltd.
Ibaraki 312-8503 (JP)**

(72) Inventors:
• **SETO Shinji
Tokyo 100-8280 (JP)**
• **GOTO Daisuke
Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **ELECTRIC BRAKE DEVICE**

(57)    It is an object of the present invention to provide an electric brake device capable of accurate control at low cost. The present invention includes a motor control device 11 that controls rotation of an electric motor 8 for pressing brake pads 5a, 5b. The motor control device 11 is provided with: a motor position-current relationship generation portion 43 that acquires a relationship between the rotational position and the current of the electric motor 8; a braking torque estimation portion 41 that estimates braking torque pressing the brake pads 5a, 5b, on the rotational position of the electric motor 8; and a braking torque-position relationship portion generation portion 42 that acquires a relationship between the rotational position and the braking torque of the electric motor 8 on the basis of information from the motor position-current relationship generation portion 43 and the braking torque estimation portion 41. The rotation of the electric motor 8 is controlled on the basis of information from the braking torque-position relationship portion generation portion 42.

FIG. 2

31: CURRENT DETECTION PORTION
32: POSITION DETECTION PORTION

**Description**

Technical Field

The present invention relates to an electric brake device used to brake vehicles.

Background Art

An electric brake device enables more precise control over braking force by accurately estimating the braking force. A thrust sensor can be used to estimate the braking force and thereby improve the estimation accuracy, but the cost increases. For example, patent literature 1 proposes the technology as a method to estimate braking force without using a thrust sensor.

According to patent literature 1, a driving force is applied to drive wheels while a braking force is applied to the wheels. The technology calibrates control parameters to drive the electric motor of a brake mechanism provided for the wheels based on a driving wheel driving force that exceeds the braking force.

Citation List

Patent Literature

Patent Literature 1: International Publication WO2020/262278

Summary of Invention

Technical Problem

The technology described in patent literature 1 needs to compare a braking force with a driving force when estimating the braking force and needs to generate the driving force and correct the control parameters. As one issue, highly accurate sensors are required to acquire accurate driving force information, increasing costs. As another issue, the drive wheels need to move especially to acquire accurate driving force information without the use of high-precision sensors, complicating the control.

It is an object of the present invention to provide an electric brake device capable of accurate control at low cost.
Solution to Problem

To achieve the above-described object, an electric brake device according to the present invention includes an electric motor, a straight-moving portion, a brake pad, and a motor control device. The straight-moving portion moves through rotations of the electric motor. The brake pad presses a disc rotor that rotates along with a wheel through a thrust generated by movement of the straight-moving portion. The motor control device controls the rotations of the electric motor. The motor control device includes a motor position-current relationship generation portion, a braking torque estimation portion, and a braking torque-position relationship generation portion. The motor position-current relationship generation portion acquires a relationship between rotational position and the current of the electric motor. The braking torque estimation portion estimates a braking torque pressing the brake pad based on the rotational positions of the electric motor at a predetermined timing. The braking torque-position relationship generation portion that acquires a relationship between rotational position and the braking torque of the electric motor based on information from the motor position-current relationship generation portion and the braking torque estimation portion. The motor control device controls rotations of the electric motor based on information from the braking torque-position relationship generation portion.

Advantageous Effects of Invention

The present invention can provide an electric brake device capable of accurate control at low cost.

Brief Description of Drawings

FIG. 1 is a schematic diagram of an electric brake device according to a first embodiment of the present invention;
FIG. 2 is a control block diagram of the electric brake device according to the first embodiment of the present invention;
FIG. 3 is a diagram illustrating a relationship between motor current and motor position acquired by a motor position-current relationship generation portion according to the first embodiment of the present invention;

FIG. 4 is a diagram illustrating a relationship between motor position and braking torque generated by a braking torque position-current relationship generation portion according to the first embodiment of the present invention;

FIG. 5 is a diagram illustrating the relationship between motor current and motor position acquired by the motor position-current relationship generation portion during a release operation according to a second embodiment of the present invention;

FIG. 6 is a diagram illustrating the relationship between motor position and braking torque generated by the braking torque-position relationship generation portion during a release according to the second embodiment of the present invention;

FIG. 7 is a diagram illustrating the relationship between motor position and braking torque generated by the braking torque-position relationship generation portion during a release according to the second embodiment of the present invention;

FIG. 8 is a diagram illustrating the relationship between motor position and motor current used for a braking torque position command conversion portion according to a third embodiment of the present invention; and

FIG. 9 is a diagram illustrating the relationship between motor position and braking torque generated by the braking torque-position relationship generation portion according to the third embodiment of the present invention.

Description of Embodiments

The description below explains embodiments of the present invention by reference to the accompanying drawings. The same reference numerals or symbols may be used for substantially the same or similar configurations. A duplicate description may be omitted.

First Embodiment

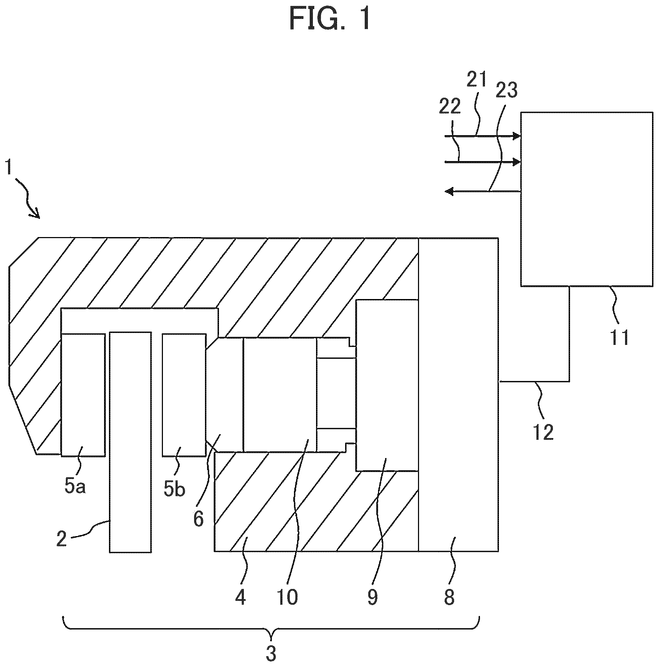

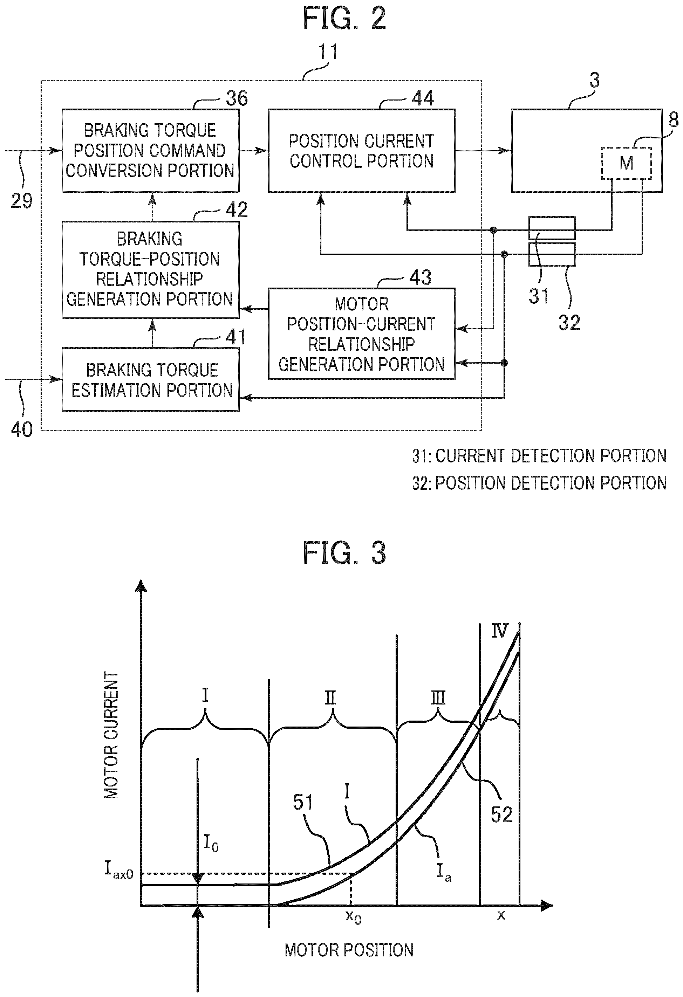

The description below explains the electric brake device described in the first embodiment. FIG. 1 is a schematic diagram of the electric brake device according to the first embodiment of the present invention. FIG. 2 is a control block diagram of the electric brake device according to the first embodiment of the present invention.

Generally, a vehicle such as a car includes four wheels such as right and left front wheels and right and left rear wheels. A brake device is provided for each wheel. As illustrated in FIG. 1, the brake device 1 includes a housing 4, brake pads 5a and 5b (pressing members), a piston 6 (straight-moving portion), and an electric motor 8, for example. The housing 4 is supported to be floatable on a carrier (unshown) in the axial direction of a disc rotor 2 (rotating member). The carrier is secured to a non-rotating portion of the vehicle, the portion being positioned toward the inside of the vehicle away from the disc rotor 2. The brake pads 5a and 5b are located on both the right and left sides of the disc rotor 2. The piston 6 can straight move inside the housing 4. The electric motor 8 drives the piston 6. The electric motor 8 supplies thrust to the brake pads 5a and 5b via a rotation-to-linear conversion mechanism 10 and the piston 6. The brake pads 5a and 5b horizontally press the disc rotor 2, rotating along with the wheels, and provide braking force based on a clamping force (pad thrust).

An output shaft of the electric motor 8 is connected to a reducer 9. An output shaft of the reducer 9 is connected to the rotation-to-linear conversion mechanism 10. The rotation-to-linear conversion mechanism 10 enables the piston 6 to move straight. The piston 6 straight moves based on the rotation of the electric motor 8.

According to the first embodiment, the disc rotor 2, the housing 4, the brake pads 5a and 5b, the piston 6, the electric motor 8, the reducer 9, and the rotation-to-linear conversion mechanism 10 configure a brake caliper 3. The rotation-to-linear conversion mechanism 10 and the piston 6 configure a straight-moving portion.

The electric motor 8 connects to a motor control device 11 (controller) via an electric wire 12. The motor control device 11 controls rotations of the electric motor 8. As illustrated in FIG. 1, the electric motor 8 and the motor control device 11 are separated from each other but may be integrated. As illustrated in FIG. 2, the electric motor 8 includes a current detection portion 31 and a position detection portion 32 to detect applied currents.

The motor control device 11 receives a control torque command 29 from a high-order control device (vehicle control ECU), for example. The motor control device 11 supplies an electric current command to the electric motor 8 based on a predetermined control program, for example, by using values detected in the current detection portion 31 and the position detection portion 32.

A control signal line 21 and communication lines 22 and 23 are connected to the motor control device 11. The control signal line 21 supplies the motor control device 11 with a control command from a high-order control device such as a vehicle control ECU (Electronic Control Unit). The communication lines 22 and 23 are used to communicate with the high-order control device by supplying information other than control commands. According to the example, the high-order control device and the motor control device 11 are provided separately but may be integrated into a control device.

FIG. 2 illustrates a calculation method of the motor control device 11. The control torque command 29 is supplied from the vehicle control ECU via the control signal line 21. The control torque command 29 is converted into a position command value in a braking torque position command conversion portion 36 and is input to a position current control portion 44. The position current control portion 44 feeds back position information acquired from the position detection portion 32 based on a position command and current values of the electric motor 8 acquired by the current detection portion 31. An electric current command is then supplied to the electric motor 8 in the brake caliper 3.

The braking torque position command conversion portion 36 converts the input control torque command into a motor position command and outputs based on the relationship between motor position and braking torque, the relationship being generated based on a braking torque-position relationship portion generation portion 42. The relationship is expressed as a braking torque position map that represents braking torque positions in a map form, for example. The braking torque-position relationship portion generation portion 42 is generated from the relationship between motor position and motor current generated by the motor position-current relationship generation portion 43 and outputs from the braking torque estimation portion 41.

The description below explains the motor position-current relationship generation portion 43. FIG. 3 is a diagram illustrating a relationship between motor current and motor position acquired by a motor position-current relationship generation portion according to the first embodiment of the present invention. The motor position-current relationship generation portion 43 acquires the rotational position and the current of the electric motor 8 and generates a relationship between the rotational position and the current of the electric motor 8.

The electric motor 8 includes the current detection portion 31 and the position detection portion 32. When a brake is operated during travel, for example, the brake pads 5a and 5b are pressed against the disc rotor 2 (applying operation) to simultaneously measure the motor position (rotational position of the electric motor 8) and the motor current (current of the electric motor 8). It is possible to acquire a relationship 51 between motor position x and motor current I as illustrated in FIG. 3. At this time, motor current I usually contains a noise component. It is preferable to perform filtering by using a lowpass filter, for example. Motor current I contains a friction component (motor current I0 corresponding to the friction component) generated from a rotation-to-linear moving portion, for example. The friction component can be estimated from the current in a clearance area before the pad contact, for example. Motor position-current relationship 52 can be acquired by extracting effective motor current Ia to the exclusion of the friction component. When the motor operation causes a large acceleration/deceleration, it is possible to extract an effective motor current component more highly accurately by excluding an inertia component as needed.

The description below explains the conditions to acquire the above-described relationship. During normal travel, the brake force is used only within a small range to operate the brake only in a range of states I and II illustrated in FIG. 3, for example. In FIG. 3, state I shows a pad clearance that causes no braking force yet. Motor current I0 for the friction component is acquired in state I.

Then, state II is used to acquire characteristics in a region that generates a low thrust. State II allows the brake pads 5a and 5b to be in contact with the disc rotor 2 during normal travel to acquire a braking force. Normal travel provides characteristics of a high thrust range that occurs less frequently. When the travel stops, operation III is performed to further increase the thrust. It is possible to acquire the relationship between motor position and motor current until the parking brake generates the thrust. Furthermore, the thrust may be temporarily increased to be larger than the thrust required for parking. The relationship between motor position and motor current can thereby be acquired in region IV corresponding to a higher thrust.

As above, the motor position-current relationship generation portion 43 acquires the relationship between the rotational position and the current of the electric motor 8 separately based on whether the vehicle travels or stops. The present embodiment can provide the relationship between motor position x and motor current I as non-linear characteristics in the entire range of braking force that needs to be generated up to a high thrust.

Next, the description below explains the braking torque estimation portion 41 that estimates a braking torque to press the brake pads 5a and 5b. The braking torque can be estimated from vehicle conditions, for example. The braking torque is estimated during braking.

Suppose longitudinal tire force Ftx causes a stop force by braking. Longitudinal tire force Ftx is expressed as a function of tire load Ftz. Longitudinal tire force Ftx can be approximated linearly in the range of small braking force and is proportional to slip ratio $\lambda$ as expressed by equation 1 below.

$$[\text{Equation 1}] \quad Ftx = \lambda/Kw \times Ftz$$

$$[\text{Equation 2}] \quad \lambda = (Vb-Vw)/Vb$$

In the equations, Vb denotes the vehicle speed, Vw denotes the value acquired by converting the wheel speed into the position of the center of gravity, and Kw denotes the proportionality coefficient determined by tire characteristics, for example.

Therefore, longitudinal force Ftx can be estimated by finding vehicle speed Vb, wheel speed Vw, tire load Ftz, and proportionality coefficient Kw. Longitudinal tire force Ftx includes braking/driving force Fd generated by the engine of an engine vehicle or the main motor of an electric vehicle. As seen from equation 3, braking/driving force Fd is subtracted from tire load Ftz to yield a value corresponding to the braking force due to the braking torque. Braking force Fb can be estimated by subtracting (excluding) the braking/driving force generated by the engine or motor from the estimated value.

$$[\text{Equation 3}] \quad Fb = Ftx-Fd$$

Tire load Ftz is estimated through the use of the vehicle weight by taking into account variations due to the roll and pitch motions of the vehicle body.

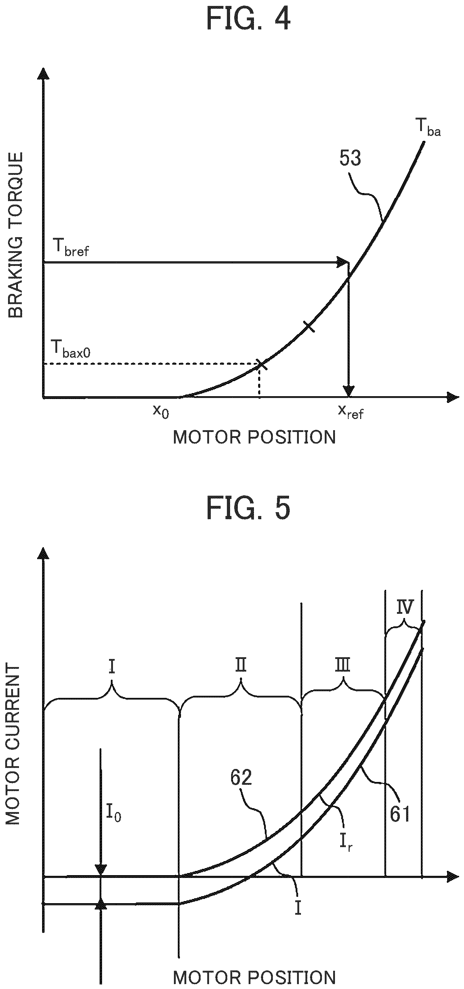

Braking torque Tb can be estimated by multiplying braking force Fb by tire radius R. At this time, rotational position x (motor position) of the electric motor 8 is also measured, making it possible to determine the relationship between that value and the estimated braking torque. The example represents the motor rotation position as position x. However, it may be also favorable to measure or estimate a straight movement displacement that corresponds to the straight-moving portion such as the piston 6, and is converted by the rotation-to-linear moving portion. This makes it possible to estimate braking torque Tbx0 at motor position $x_0$ in FIG. 4, for example. FIG. 4 is a diagram illustrating a relationship between motor position and braking torque generated by a braking torque position-current relationship generation portion according to the first embodiment of the present invention.

To estimate the braking torque, the braking torque estimation portion 41 requires estimating tire load Ftz, wheel speed Vw, and braking/driving force Fd as described above. The description below explains the corresponding estimation timings.

For example, suppose a clutch is used to break the connection between the wheel and the engine or the main motor that drives the wheel, resulting in braking/driving force Fd = 0. Estimation of braking/driving force Fd is unnecessary, eliminating possible errors due to the estimation. Suppose the influence of braking/driving force Fd is small. The relationship between tire load Ftz and braking/driving force Fd is Ftz » Fd. It is possible to decrease the influence of errors resulting from the estimation of braking/driving force Fd.

While the vehicle is turning, the estimation needs to take into account that tire load Ftz varies with the right and left sides and also needs to be estimated and the wheel speed of each wheel needs to be converted into the center of gravity position. Estimation errors can be reduced by limiting the estimation to straight travel.

A slope, if any, may affect the acceleration and deceleration to increase estimation errors. Estimation errors can be reduced by limiting the estimation to small slopes.

As above, factors in estimation errors can be removed by selecting some conditions to reduce error factors at given timings. The estimation accuracy can be improved.

In addition to the methods described above, the braking torque may be estimated based on information from various sensors that acquire vehicle information. Examples of various sensors include acceleration sensors, yaw rate sensors, steering angle sensors, and GPS (Global Positioning System). At least one of these is used. The above-described information is comparable to sensor information 40 in FIG. 2 and is input to the braking torque estimation portion 41.

The description below explains the braking torque-position relationship generation portion 42. The braking torque-position relationship generation portion 42 acquires the relationship between rotational position and braking torque of the electric motor 8 based on the information from the motor position-current relationship generation portion 43 and the braking torque estimation portion 41.

The motor position-current relationship generation portion 43 determines the relationship between motor current I and motor position x. Therefore, motor current Iax0 at motor position x0 is to be estimated in the braking torque estimation portion 41 and can also be calculated from the relationship acquired by the motor position-current relationship generation portion 43.

Normally, the effective motor current component and the motor generate a torque that is proportional to the resulting braking torque. Therefore, the following equation can be used to calculate proportionality coefficient Ktia.

$$[\text{Equation 4}] \quad Ktia = Tbax0/Iax0$$

It may be favorable to increase the accuracy of proportional coefficient Ktia by using data at multiple points, for example. An average of data at multiple points can be used for calculation to provide high accuracy. The accuracy can be further improved by removing a noise value, if any, that deviates significantly from other values at multiple points. The following equation expresses braking torque Tba using Ktia.

$$[\text{Equation 5}] \quad Tba = Ktia \times Ia$$

The entire characteristics of motor current Ia and motor position, illustrated in FIG. 3, are multiplied by Ktia to acquire a relationship 53 (FIG. 4) between braking torque Tba and motor position x.

The description below explains the braking torque control method, again. When the control torque command 29, Tbref, is input from a higher level, the braking torque position command conversion portion 36 finds motor position xref based on the relationship 53 between braking torque Tb and motor position x, as illustrated in FIG. 4. Position command xref is input to the position current control portion 44 and is compared with the value detected by the position detection portion 32 to provide feedback control. The position command is then converted into an electric current command that is output to the electric motor 8. The control torque command 29 may be replaced by a command value simply representing the braking force applied to the tires.

The present embodiment can provide highly accurate braking torque control in consideration of differences in rigidity of parts usually characterized by large individual differences, differences in characteristics between positions and braking torque depending on differences in motor characteristics, and characteristics between motor position and braking torque that are detected during normal braking operations and are subject to aging variations. The present embodiment can reduce costs without using a thrust sensor for braking torque control.

Second Embodiment

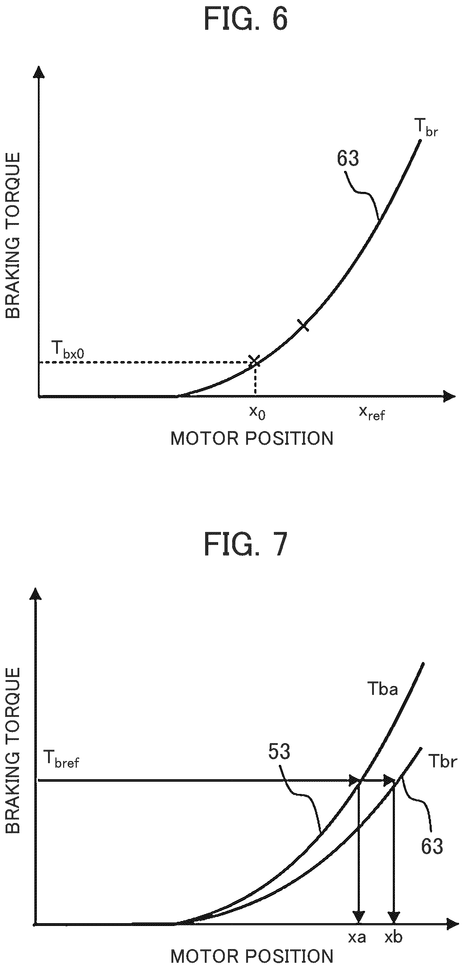

The description below explains the second embodiment of the present invention. The second embodiment explains how to generate a map during release operation while the first embodiment describes the map generation during the applying operation. FIG. 5 is a diagram illustrating the relationship between motor current and motor position acquired by the motor position-current relationship generation portion during a release operation according to the second embodiment of the present invention. FIG. 6 is a diagram illustrating the relationship between motor position and braking torque generated by the braking torque-position relationship generation portion during a release according to the second embodiment of the present invention. FIG. 7 is a diagram illustrating the relationship between motor position and braking torque generated by the braking torque-position relationship generation portion during a release according to the second embodiment of the present invention.

FIG. 5 illustrates the relationship between the motor current and motor position acquired during a release operation. As explained in the first embodiment, a stop condition forces the electric motor to operate up to region IV higher than the thrust required for the parking brake. The electric motor subsequently operates to once return the thrust necessary for the parking brake, acquiring a relationship 61 between motor current I and motor position x in region IV. The parking brake during parking is thereafter released to acquire a relationship 62 between the motor current and motor position during the release in the order of III, II, and I. Similar to the applying operation, it is possible to acquire the relationship between effective current Ir and motor position x in consideration of motor current I0 for friction.

Suppose the applying operation is performed and then the release operation is performed also during traveling. In this case, the electric motor operates to lower the current from II to I in FIG. 5, acquiring the relationship 61 between motor position x and motor current I. When the brake pad causes a clearance, the current in region I becomes almost constant, acquiring motor current I0 comparable to the friction.

Next, the description below explains the braking torque estimation portion 41. The braking torque can be estimated from the vehicle conditions, similar to the applying operation, for example. The braking torque is estimated when the brake is released. At this time it is possible to estimate the braking torque Tbx0 at motor position x0 by simultaneously measuring also the motor position.

Similar to the applying operation, effective motor current Ir at motor position x0 can also be acquired from FIG. 5.

The proportionality coefficient can be calculated because effective motor current Ir is proportional to the generated braking torque.

$$[\text{Equation 6}] \quad Ktir = Tbx0/Ix0$$

Similar to the applying operation, it may be favorable to find this proportionality coefficient Ktir from multiple points. The braking torque can be expressed as the following equation using Ktir.

$$[\text{Equation 7}] \quad Tbr = Ktir \times Ir$$

Thus, the entire characteristics of motor current Ir and motor position x, illustrated in FIG. 5, are multiplied by Ktit to acquire a relationship 63 (FIG. 6) between braking torque Tb and motor position x.

Generally, the forward efficiency and the reverse efficiency do not necessarily match. As illustrated in FIG. 7, two characteristics are acquired, namely, characteristic (Tba-x) 53 at the applying side and characteristic (Tbr-x) 63 at the release side.

Based on the characteristics, the braking torque position command conversion portion 36 identifies an applying operation or a release operation, converts input control torque command Tbref into motor position command xref, and outputs the command to the position current control portion 44. The position current control portion 44 compares motor position command xref with the value detected by the position detection portion 32 and provides feedback control. The motor position command is converted into an electric current command and is output to the electric motor 8.

The present embodiment processes commands based on the distinction between the applying operation and the release operation, making it possible to highly accurately control the braking torque according to the operations.

Third Embodiment

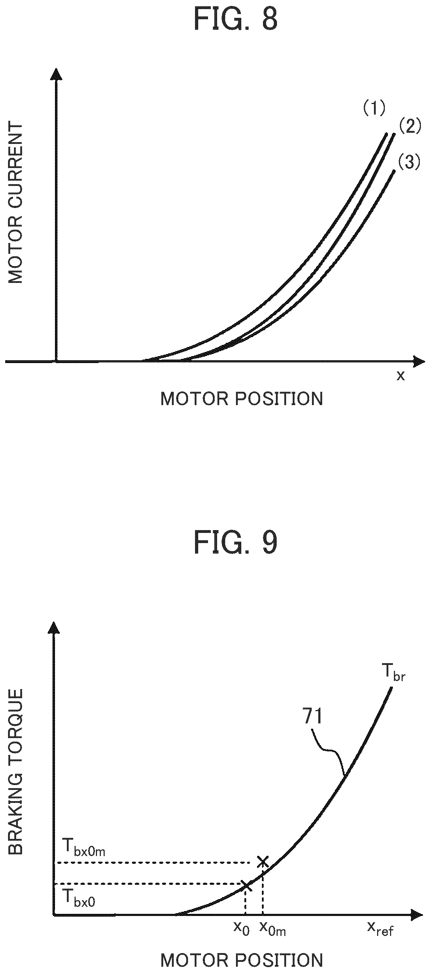

Next, the description below explains the third embodiment of the present invention by using FIGS. 8 and 9. FIG. 8 is a diagram illustrating the relationship between motor position and motor current used for a braking torque position command conversion portion according to the third embodiment of the present invention. FIG. 9 is a diagram illustrating the relationship between motor position and braking torque generated by the braking torque-position relationship generation portion according to the third embodiment of the present invention.

The third embodiment describes examples in consideration of characteristics changes due to differences in environments such as the environment (environment A) where the motor position-current relationship generation portion 43 acquires the relationship between motor position and motor current as explained in the first and second embodiments; the environment (environment B) where the braking torque estimation portion 41 estimates the braking torque; and the environment (environment C) where control is provided based on the result.

For example, rigidity changes due to contraction and expansion of brake pads and devices due to temperature. The relationship between motor current I and motor position x varies with changes in the torque constant of the electric motor 8.

The torque generated by the electric motor 8 or the thrust converted through the rotation-to-linear movement is converted into braking torque. In this case, the friction coefficient of brake pads may also vary with the temperature and the rotational speed.

According to the third embodiment, the motor position-current relationship generation portion 43 previously stores or formulates the relationship with environmental changes. For example, a conversion equation such as equation 8 is provided. An example formulation represents that motor position x, generating the same thrust, changes as expressed in the following equation.

$$[\text{Equation 8}] \quad x = a \times Tpad + b$$

where Tpad denotes the brake pad temperature, and a and b respectively denote the slope and the intercept referring to the temperature. This value is used to estimate the characteristics under standard conditions (such as room temperature).

For example, suppose characteristics (1) in FIG. 8 are acquired under environment A where the brake pad temperature is 300 °C and the motor temperature is 60 °C. In this case, the characteristics are converted once based on equation 8 using room temperature for the brake pads 5a and 5b. Then, resulting characteristics (2) are acquired. The torque constant usually decreases as the motor temperature decreases. The motor current decreases at points where the same torque is generated. In this case, characteristics (3) are acquired under the condition of room temperature for the motor and the brake pads.

The brake pad temperature and the motor temperature may be directly measured or may be estimated from the number of operations.

Meanwhile, the braking torque is found by multiplying the thrust resulting from the electric motor 8 by the friction coefficient between the set of brake pads 5a and 5b and the disc rotor 2. However, the friction coefficient varies with environments such as the temperature and relative speed of contacting objects. When the acquired environment changes to a different one, the braking torque estimation portion 41 estimates or measures the temperature and relative speed of the brake pads 5a and 5b. Also in this case, the standard condition (such as room temperature and speed V0) is determined to calculate the braking torque and motor position (Tbx0, x0) under the standard condition referring to the measured braking torque and motor position (Tbx0m, x0m) as illustrated in FIG. 9.

The values in the standard state are classified into the applying operation and the release operation as needed to calculate the proportionality coefficient based on equation 4 or 6.

Characteristics (3) in FIG. 8 are multiplied by proportionality coefficient Ktir, for example, to acquire a relationship 71 between motor position x and braking torque Tba or Tbr indicated by the solid line in FIG. 9.

When further control is required, the relationship 71 between braking torque and motor position is calculated under the environment (environment C) (motor temperature, brake pad temperature, and relative speed), to provide control based on the relationship between braking torque and motor position in standard conditions. The control torque command may be calculated based on this relationship. In such a case, the motor position is output as a motor position command to the position current control portion.

The present embodiment can highly accurately control the braking torque despite differences in the environment (environment A) where the motor position-current relationship generation portion 43 acquires the relationship between motor position and motor current; the environment (environment B) where the braking torque estimation portion 41 estimates the braking torque; and the environment (environment C) where control is provided based on the result.

Fourth Embodiment

The description below explains a fourth embodiment. The fourth embodiment explains the timing to update the relationship between braking torque and motor position in the braking torque-position relationship generation portion 42 as explained in the first through third embodiments.

As calculated in the first through third embodiments, proportionality coefficient Ktia or Ktir between the effective motor current and the generated braking torque practically changes over time at a small rate. In particular, as explained in the third embodiment, the proportionality coefficient converted into the standard state is subject to a small change. For example, consider Ktia or Ktir detected during the braking torque estimation changes significantly (such as a change of 10% or more) from the previous value. In such a case, the detected value is evaluated as noise and is not adopted. Instead, the previous value is adopted. Thus, errors can be reduced.

The braking torque-position relationship generation portion 42 may acquire the braking torque value estimated by the braking torque estimation portion 41 multiple times. The acquired braking torque values may be averaged or filtered. The filtered value Ktia or Ktir may be used to acquire and update the relationship between the rotational position and the braking torque of the electric motor 8. This makes it possible to reduce error factors and improve accuracy.

The above-described embodiments have illustrated the electric brake using the disc brake. However, for example, the electric motor may operate a piston in various brakes such as a drum brake. It may be favorable to generate a braking force by pressing the brake lining against the brake drum as a rotating body.

List of Reference Signs

1: brake device, 2: disc rotor, 3: brake caliper, 4: housing, 5a, 5b: brake pad, 6: piston, 8: electric motor, 9: reducer, 10: rotation-to-linear conversion mechanism, 11: motor control device, 29: control torque command, 31: current detection portion, 32: position detection portion, 36: braking torque position command conversion portion, 41: braking torque estimation portion, 42: braking torque-position relationship generation portion, 43: motor position-current relationship generation portion, 44: position current control portion

**Claims**

1. An electric brake device comprising: an electric motor; a straight-moving portion that moves through rotations of the electric motor; a brake pad pressing a disc rotor that rotates along with a wheel through a thrust generated by movement of the straight-moving portion; and a motor control device that controls rotations of the electric motor, wherein the motor control device includes:

   a motor position-current relationship generation portion that acquires a relationship between rotational position and current of the electric motor;
   a braking torque estimation portion that estimates a braking torque pressing the brake pad based on rotational positions of the electric motor at a predetermined timing; and
   a braking torque-position relationship generation portion that acquires a relationship between rotational position and the braking torque of the electric motor based on information from the motor position-current relationship generation portion and the braking torque estimation portion; and
   wherein the motor control device controls rotations of the electric motor based on information from the braking torque-position relationship generation portion.

2. The electric brake device according to claim 1,
   wherein the braking torque estimation portion estimates a braking torque when a vehicle travels straight.

3. The electric brake device according to claim 2,
   wherein, when the braking torque estimation portion estimates a braking torque, the electric brake device causes a disconnect between the wheel and an engine or a main motor to drive the wheel.

4. The electric brake device according to claim 1,
wherein the motor position-current relationship generation portion acquires a relationship between rotational position and current of the electric motor separately based on whether a vehicle travels or stops.

5. The electric brake device according to claim 1,
wherein the motor position-current relationship generation portion acquires a relationship between rotational position and current of the electric motor separately depending on whether an applying operation or a release operation is active.

6. The electric brake device according to claim 1,
wherein the motor position-current relationship generation portion acquires a relationship between rotational position and current of the electric motor during an applying operation or a release operation.

7. The electric brake device according to claim 3,
wherein the braking torque estimation portion estimates a braking torque by excluding a braking/driving force generated by the engine or the main motor.

8. The electric brake device according to claim 1,
wherein the braking torque estimation portion estimates a braking torque based on information from a sensor that acquires vehicle information.

9. The electric brake device according to claim 8,
wherein the sensor represents at least one of acceleration sensor, yaw rate sensor, steering angle sensor, or GPS (Global Positioning System).

10. The electric brake device according to claim 1,
wherein the braking torque estimation portion estimates a braking torque based on a tire load and a slip ratio.

11. The electric brake device according to claim 1,
wherein the braking torque-position relationship generation portion acquires a braking torque value estimated by the braking torque estimation portion multiple times, filters acquired braking torque values, and acquires a relationship between a rotational position and the braking torque of the electric motor.

12. The electric brake device according to claim 1,
wherein the motor position-current relationship generation portion acquires a relationship between position and motor current by estimating characteristics applied to change to a different environment from an environment used to acquire a relationship between rotational position and current of the electric motor.

13. The electric brake device according to claim 1,
wherein the braking torque estimation portion estimates a braking torque applied to change to a different environment from an environment used to acquire a braking torque.

14. The electric brake device according to claim 1, comprising:
a braking torque position command conversion portion that outputs a position command for the electric motor based on information from the braking torque-position relationship generation portion.

# FIG. 1

# FIG. 2

31: CURRENT DETECTION PORTION
32: POSITION DETECTION PORTION

# FIG. 3

# FIG. 4

# FIG. 5

# FIG. 6

# FIG. 7

# FIG. 8

# FIG. 9

| INTERNATIONAL SEARCH REPORT | International application No. |
|---|---|
| | **PCT/JP2023/017701** |

**A. CLASSIFICATION OF SUBJECT MATTER**

***B60T 8/171***(2006.01)i; ***B60T 13/74***(2006.01)i; ***F16D 65/16***(2006.01)i; *F16D 121/24*(2012.01)n; *F16D 125/20*(2012.01)n
FI: B60T8/171 Z; B60T13/74 G; F16D65/16; F16D121:24; F16D125:20

According to International Patent Classification (IPC) or to both national classification and IPC

**B. FIELDS SEARCHED**

Minimum documentation searched (classification system followed by classification symbols)

B60T8/171; B60T13/74; F16D65/16; F16D121/24; F16D125/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-213201 A (HITACHI AUTOMOTIVE SYSTEMS, LTD.) 27 October 2011 (2011-10-27) paragraphs [0024]-[0025], [0056]-[0057], fig. 3, 14 | 1-2, 6, 8-9, 11-14 |
| A | | 3-5, 7, 10 |
| A | JP 2008-184057 A (HONDA MOTOR CO., LTD.) 14 August 2008 (2008-08-14) entire text, all drawings | 1-14 |

☐ Further documents are listed in the continuation of Box C.　　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 June 2023** | **27 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/017701**

| Patent document cited in search report | | | Publication date (day/month/year) | Patent family member(s) | Publication date (day/month/year) |
|---|---|---|---|---|---|
| JP | 2011-213201 | A | 27 October 2011 | US 2011/0246039 A1<br>paragraphs [0038]-[0039],<br>[0069]-[0070], fig. 3, 14<br>DE 102011006419 A1<br>CN 102207145 A | |
| JP | 2008-184057 | A | 14 August 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020262278 A